# EUROPEAN PATENT APPLICATION

(11) **EP 4 376 158 A1**
(43) Date of publication of application: **29.05.2024**
(21) Application number: 23211956.0
(22) Date of filing: 24.11.2023
(51) Int. Cl.: H01M 10/42, H01M 50/105, H01M 50/284, H01M 50/298, H01M 50/50, H01M 50/55, H01M 50/557, H01M 50/569

(54) **BATTERY PACK**

(30) Priority: 24.11.2022 KR 20220159164
(71) Applicant: Samsung SDI Co., Ltd., Yongin-si, Gyeonggi-do 17084 (KR)
(72) Inventor: LEE, Woo Jin, 17084 Yongin-si (KR)
(74) Representative: Marks & Clerk LLP

(57) **Abstract**

A battery pack includes a battery cell; an electrode tab coupled to the battery cell; a protection circuit module electrically connected to the battery cell that includes a circuit board and a molding part covering the circuit board; and a flexible printed circuit board electrically connected to the protection circuit module. The molding part includes a fixing part to which the flexible printed circuit board is fixed.

## Description

### BACKGROUND

### 1. Field

The present disclosure relates to a battery pack.

### 2. Description of the Related Art

In general, a battery pack includes a battery cell and a protection circuit module connected to the battery cell. The protection circuit module controls charging and discharging of the battery cell. Protection elements such as a positive temperature coefficient (PTC) element and a thermal fuse are installed in the protection circuit module to block current flow to the outside when the temperature of a battery cell rises to a high temperature, or when an abnormality occurs in a set voltage due to excessive charging and discharging.

In addition, a flexible printed circuit board may be coupled to the protection circuit module for electrical connection with an external circuit, and the flexible printed circuit board may be attached to the protection circuit module through a separate adhesive member or adhesive tape.

The above information disclosed in this Background section is only for enhancement of understanding of the background of the disclosure and therefore it may contain information that does not constitute prior art.

### SUMMARY

The present disclosure provides a battery pack capable of improving reliability by stably fixing a flexible printed circuit board.

In one embodiment, a battery pack according to the present disclosure includes: a battery cell; an electrode tab coupled to the battery cell; a protection circuit module electrically connected to the battery cell that includes a circuit board and a molding part covering the circuit board; and a flexible printed circuit board electrically connected to the protection circuit module. The molding part includes a fixing part to which the flexible printed circuit board is fixed.

The fixing part may include a first opening provided on a lower surface of the molding part; a second opening provided on a side of the molding part; and a connection passage connecting the first opening and the second opening.

The flexible printed circuit board may be inserted through the first opening and drawn out to the second opening through the connection passage.

The battery pack may include an electronic device seated on a first surface of the circuit board; and a first pad and a second pad on a second surface of the circuit board opposite to the first surface. The first pad is electrically connected to the electrode tab and the second pad is electrically connected to the flexible printed circuit board.

The molding part may cover the first surface and the electronic device.

The molding part may cover the second surface and expose the first pad and the second pad.

One end of the flexible printed circuit board may be coupled to a lower surface of the molding part, and another end of the flexible printed circuit board may protrude from a side surface of the molding part.

The battery pack may also include a connector at the other end of the flexible printed circuit board.

At least some of the above and other features of the invention are set out in the claims.

### BRIEF DESCRIPTION OF DRAWINGS

FIG. 1 is a perspective view illustrating a battery pack according to an embodiment of the present disclosure.
FIG. 2 is an exploded perspective view of a battery cell of FIG. 1.
FIG. 3 is a cross-sectional view illustrating a protection circuit module of FIG. 1.
FIG. 4 is a cross-sectional view illustrating a configuration in which the battery cell and the protection circuit module of FIG. 1 are connected to each other.

### DETAILED DESCRIPTION

Hereinafter, preferred embodiments of the present disclosure will be described in detail with reference to the accompanying drawings.

Embodiments of the present disclosure are provided to more fully describe the present disclosure to those skilled in the art, and the following embodiments may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms "comprise" and/or "comprising," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present invention.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

A preferred embodiment of the present disclosure will be described in detail with reference to the accompanying drawings to the extent that a person skilled in the art to which the present disclosure belongs can easily implement the present disclosure.

Here, the same reference numerals are assigned to parts having similar configurations and operations throughout the specification. In addition, when a part is said to be electrically coupled to another part, this includes not only a case where it is directly connected but also a case where it is connected with another element interposed therebetween.

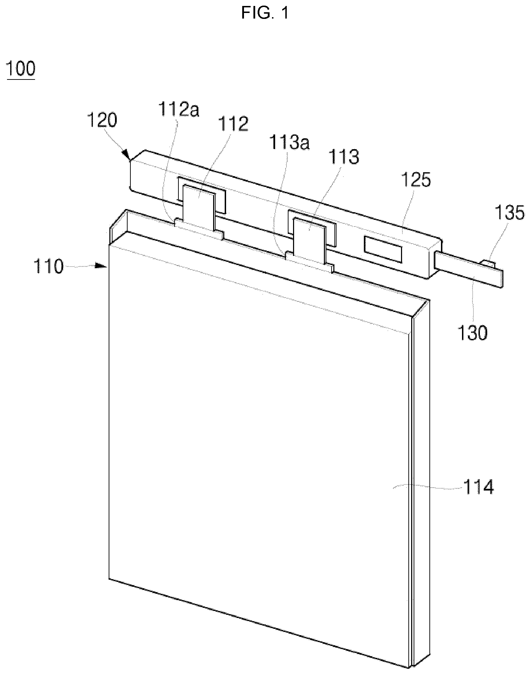

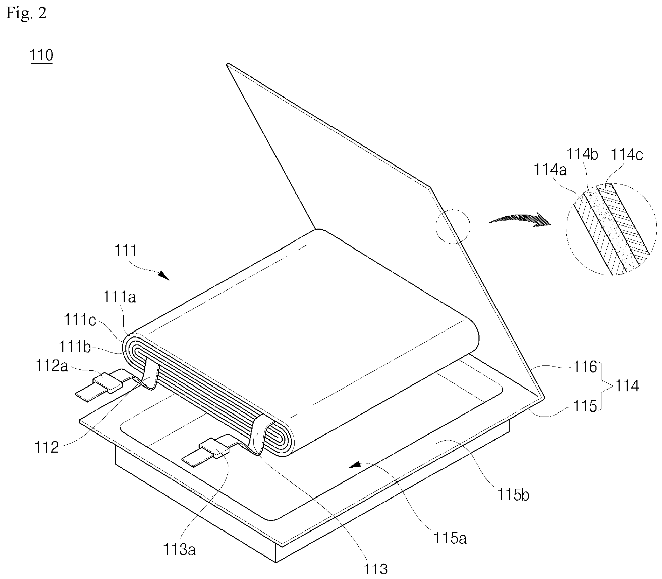

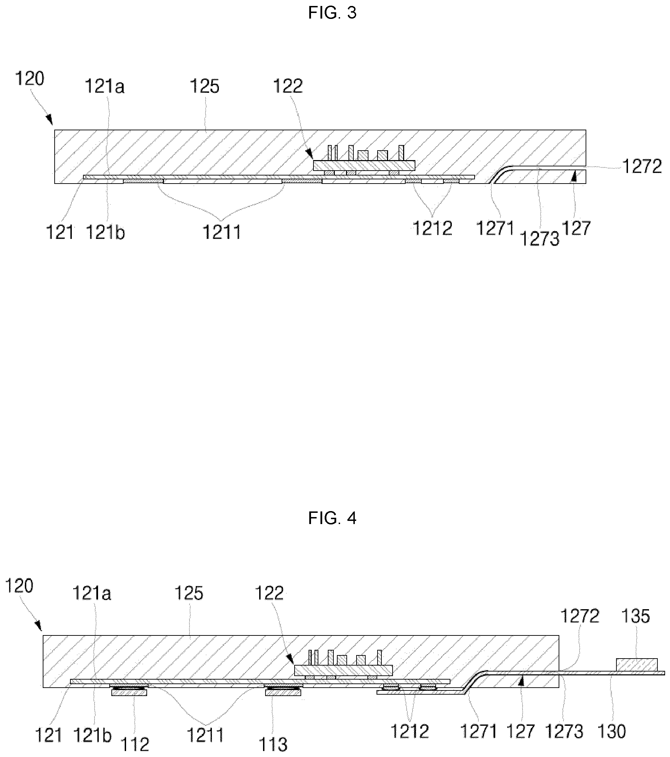

FIG. 1 is a perspective view illustrating a battery pack according to an embodiment of the present disclosure. FIG. 2 is an exploded perspective view of a battery cell of FIG. 1. FIG. 3 is a cross-sectional view illustrating a protection circuit module of FIG. 1. FIG. 4 is a cross-sectional view illustrating a configuration in which the battery cell and the protection circuit module, of FIG. 1, are connected to each other.

Referring to FIGS. 1 to 4, the battery pack 100 according to an embodiment of the present disclosure includes a battery cell 110, a protection circuit module (PCM) 120, and a flexible printed circuit board (FPCB) 130.

As shown in FIG. 2, the battery cell 110 may include an electrode assembly 111 and a case 114 accommodating the electrode assembly 111. The electrode assembly 111 is formed by winding or overlapping a laminate of a first electrode plate 111a, a separator 111c, and a second electrode plate 111b, which are formed in a thin plate shape or film shape. In one or more embodiments, the first electrode plate 111a may operate or function as a positive electrode, and the second electrode plate 111b may operate or function as a negative electrode. In one or more embodiments, the first electrode plate 111a and the second electrode plate 111b may be disposed with different polarities (e.g., the first electrode plate 111a may operate or function as a negative electrode, and the second electrode plate 111b may operate or function as a positive electrode).

The first electrode plate 111a is formed by applying a first electrode active material (such as a transition metal oxide) to a first electrode current collector formed of a metal foil (such as aluminium), and includes a first electrode uncoated portion, which is an area where the first active material is not applied. In addition, a first electrode tab 112 is attached to the first electrode uncoated portion. For example, in one or more embodiments, the first electrode tab 112 may be attached to the first electrode uncoated portion by welding. One end of the first electrode tab 112 is electrically connected to the first electrode plate 111a, and the other end of the first electrode tab 112 extends (e.g., protrudes) to the outside of the case 114. For example, in one or more embodiments, the first electrode tab 112 may include nickel.

The second electrode plate 111b is formed by applying a second electrode active material (such as graphite or carbon) to a second electrode current collector formed of a metal foil (such as copper or nickel), and includes a second electrode uncoated portion, which is an area where the second active material is not applied. In addition, a second electrode tab 113 is attached to the second electrode uncoated portion. For example, in one or more embodiments, the second electrode tab 113 may be attached to the second electrode uncoated portion by welding. One end of the second electrode tab 113 is electrically connected to the second electrode plate 111b, and the other end of the second electrode tab 113 extends (e.g., protrudes) to the outside of the case 114. For example, in one or more embodiments, the second electrode tab 113 may include nickel.

In one or more embodiments, the first electrode tab 112 and the second electrode tab 113 are wrapped with insulating members 112a and 113a, and thus the first electrode tab 112 and the second electrode tab 113 are not electrically shorted with the case 114.

The separator 111c is positioned between the first electrode plate 111a and the second electrode plate 111b to prevent a short circuit and to enable the movement of lithium ions. The separator 111c may be made, for example, of polyethylene, polypropylene, or a composite film of polyethylene and polypropylene, but the present disclosure is not limited to these materials.

The case 114 accommodates the electrode assembly 111. For example, in one or more embodiments, the case 114 may be formed in the form of a pouch to accommodate and seal the electrode assembly 111. The case 114 includes a lower case 115 in which the electrode assembly 111 is accommodated and an upper case 116 covering the electrode assembly 111 and coupled to the lower case 115. An accommodation groove or recess 115a in which the electrode assembly 111 can be accommodated is formed in the lower case 115 through pressing, etc., and a sealing part 115b for sealing with the upper case 116 is formed on the outer periphery of the accommodation groove 115a. The sealing part 115b may be formed along one side and the other three sides where the lower case 115 and the upper case 116 integrally contact each other. The case 114 includes two long sides and two short sides perpendicular to the two long sides. In one or more embodiments, the first and second electrode tabs 112 and 113 of the electrode assembly 111 are drawn out through one short side of the case 114. In this embodiment, the insulating members 112a and 113a formed on the first and second electrode tabs 112 and 113 are sealed to the sealing part 115b. That is, the insulating members 112a and 113a are formed at the areas where the first and second electrode tabs 112 and 113 and the sealing part 115b are in contact with each other, thereby preventing the first and second electrode tabs 112 and 113 from being shorted with the case 114.

In one or more embodiments, the case 114 is formed as a multi-layered structure having a first insulation layer 114a, a metal layer 114b on the first insulation layer 114a, and a second insulation layer 114c on the metal layer 114b.

The first insulation layer 114a is an inner surface of the case 114 and is formed of a material having insulating properties and thermal adhesiveness. In addition, the first insulation layer 114a is formed on one surface (e.g., an inner surface) of the metal layer 114b and forms an inner surface of the case 114 facing the electrode assembly 111. The first insulation layer 114a may be formed of casted polypropylene (CPP) or an equivalent material that does not react with an electrolyte or the like. When the electrode assembly 111 is accommodated in the lower case 115 and is covered with the upper case 116, the first insulation layer 114a of the lower case 115 and the first insulation layer 114a of the upper case 116 come into contact with each other. Therefore, when the sealing part 115b is thermally sealed, the first insulation layers 114a are bonded to each other to seal the case 114.

The metal layer 114b is interposed between the first insulation layer 114a and the second insulation layer 114c, and serves to prevent moisture and oxygen from entering from the outside and preventing an electrolyte filled in the case 114 from leaking out to the outside. In addition, the metal layer 114b serves to maintain mechanical strength of the case 114. In one or more embodiments, the metal layer 114b may be made of aluminium.

The second insulation layer 114c is an outer surface of the case 114 and serves to mitigate mechanical and chemical shocks against external electronic devices. In addition, the second insulation layer 114c is formed on the other surface (e.g., an outer surface) of the metal layer 114b and forms an outer surface of the case 114. The second insulation layer 114c may be formed of nylon, polyethylene terephthalate (PET), polybutylene terephthalate (PBT), polybutylene naphthalate (PBN), or an equivalent thereof.

In addition, the case 114 may be formed in the form of a pouch and may be made of a can made of a metal material. That is, the battery cell 110 may be formed in a prismatic shape as well as in the pouch shape.

The protection circuit module 120 is electrically connected to the battery cell 110 and controls charging/discharging of the battery cell 110. The protection circuit module 120 may include a circuit board 121, a plurality of electronic devices 122 formed on the circuit board 121, and a molding part 125 that molds the circuit board 121 and the electronic devices 122 together.

The circuit board 121 may be made of resin and may be formed as a substantially flat rectangular plate. For example, the circuit board 121 may be a printed circuit board (PCB). The circuit board 121 may include a first surface 121a and a second surface 121b opposite to the first surface 121a.

A plurality of electronic devices 122 may be seated (e.g., mounted) on the first surface 121a and electrically connected to the circuit board 121. A first pad 1211 electrically connected to the battery cell 110 and a second pad 1212 connected to the flexible printed circuit board 130 may be formed on the second surface 121b. In one or more embodiments, the protection circuit module 120 may include two first pads 1211 and two second pads 1212. The first pad 1211 and the second pad 1212 may be exposed to the second surface 121b of the circuit board 121. That is, the first pad 1211 and the second pad 1212 may not be covered by the molding part 125 that molds the circuit board 121. In some examples, the first pad 1211 and the second pad 1212 may include a metal such as copper, aluminium, palladium, titanium, tungsten, nickel, gold, or silver.

The first and second electrode tabs 112 and 113 of the battery cell 110 may be electrically connected to the first pad 1211. In some embodiments, the first and second electrode tabs 112 and 113 may be electrically connected to the first pad 1211 through solder. In some embodiments, the flexible printed circuit board 130 may be electrically connected to the second pad 1212 through solder.

The electronic device 122 may be provided on the first surface 121a of the circuit board 121. In some embodiments, the electronic device 122 may include a circuit element for controlling charging and discharging of the battery cell 110, a protection circuit device such as a circuit device for preventing over-discharging and over-charging, etc.

The molding part 125 may mold (e.g., cover) the first surface 121a and the second surface 121b of the circuit board 121. In addition, the molding part 125 may also mold (e.g., cover) the side surfaces of the circuit board 121. Accordingly, the circuit board 121 may be protected from the external environment by the molding part 125. In some embodiments, the molding part 125 may mold (e.g., cover) the electronic device 122 seated on the first surface 121a of the circuit board 121. The height of the molding part 125 formed on the first surface 121a of the circuit board 121 may be greater than the height of the electronic device 122. In addition, the molding part 125 may mold (e.g., cover) the second surface 121b of the circuit board 121 but expose the first pad 1211 and the second pad 1212 formed on the second surface 121b.

In some examples, the molding part 125 is made of an insulating material and may include resin, epoxy, a mold compound, an epoxy mold compound, a polymer, or a protective material.

The molding part 125 may include a fixing part 127 into which the flexible printed circuit board 130 is inserted. The fixing part 127 may be formed by processing the molding part 125. In some embodiments, the fixing part 127 may be formed by mold injection or drilling. For example, in one or more embodiments, after placing the circuit board 121 in an injection molding mold provided with an internal structure for forming the fixing part 127, the circuit board 121 may be molded to form the molding part 125 including the fixing part 127. In some embodiments, after forming the molding part 125 by molding the circuit board 121, the fixing part 127 may be formed in the molding part 125 by drilling. The fixing part 127 may include a first opening 1271 provided on the lower surface of the molding part 125, a second opening 1272 provided on the side surface of the molding part 125, and a connection passage 1273 connecting the first opening 1271 and the second opening 1272. In some embodiments, one end of the flexible printed circuit board 130 may be inserted through the first opening 1271 to pass through the connection passage 1273, and then be drawn out to the second opening 1272. In one or more embodiments, one end of the flexible printed circuit board 130 may be inserted through the second opening 1272 and then drawn out to the first opening 1271 through the connection passage 1273. In this way, the flexible printed circuit board 130 may be fitted and fixed to the fixing part 127 of the molding part 125.

The flexible printed circuit board 130 is electrically connected to the protection circuit module 120. One end of the flexible printed circuit board 130 may be electrically connected to the second pad 1212 of the circuit board 121, and the other end of the flexible printed circuit board 130 may be drawn out to one side of the molding part 125. In some embodiments, one end of the flexible printed circuit board 130 may be coupled to the second pad 1212 of the circuit board 121 by solder, and the other end of the flexible printed circuit board 130 may be inserted into the first opening 1271 of the fixing part 127, pass through the connection passage 1273, and then be drawn out to the second opening 1272. In some embodiments, after the flexible printed circuit board 130 is first inserted into the fixing part 127, one end of the flexible printed circuit board 130 may be coupled to the second pad 1212 of the circuit board 121 by solder. Accordingly, one end of the flexible printed circuit board 130 may be exposed to a lower portion of the protection circuit module 120, and the other end may protrude to the side surface of the protection circuit module 120.

In addition, a connector 135 may be coupled to the other end of the flexible printed circuit board 130 protruding from the side surface of the protection circuit module 120 (e.g., the connector 135 may be coupled to the end of the flexible printed circuit board 130 that is opposite to the end of the flexible printed circuit board 130 that is connected to the circuit board 121). The connector 135 may serve as a passage electrically connected to an external circuit (or module). A plurality of circuit patterns that connect the protection circuit module 120 and the connector 135 may be formed on the flexible printed circuit board 130.

In this way, in the battery pack 100 according to the present disclosure, by including the protection circuit module 120 having formed therein the fixing part 127 to which the flexible printed circuit board 130 is fixed, the flexible printed circuit board 130 may be stably fixed, thereby improving the reliability of the battery pack 100.

In addition, in the battery pack 100 according to the present disclosure, by fixing the flexible printed circuit board 130 to the fixing part 127 of the protection circuit module 120, there is no need for a separate adhesive member (or tape), thereby simplifying the manufacturing process and achieving a reduction in manufacturing costs.

As described above, in the battery pack according to an embodiment of the present disclosure, by including a protection circuit module having a fixing part to which a flexible printed circuit board is fixed, the flexible printed circuit board can be stably fixed and the reliability of the battery pack can be improved.

In the battery pack according to an embodiment of the present disclosure, by including a protection circuit module having a fixing part to which a flexible printed circuit board is fixed, the flexible printed circuit board can be stably fixed, thereby improving the reliability of the battery pack.

In addition, in the battery pack according to an embodiment of the present disclosure, since the flexible printed circuit board is fixed to the fixing part of the protection circuit module, there is no need for a separate adhesive member (or tape), and thus the manufacturing process can be simplified and the manufacturing costs can be reduced.

While the foregoing embodiment has been described to practice the battery pack according to the present disclosure, it should be understood that the embodiment described herein should be considered in a descriptive sense only and not for purposes of limitation, and various changes in form and details may be made therein without departing from the scope of the disclosure as defined by the following claims.

## Claims

1. A battery pack comprising:
a battery cell;
an electrode tab coupled to the battery cell;
a protection circuit module electrically connected to the battery cell, the protection circuit module comprising a circuit board and a molding part covering the circuit board; and
a flexible printed circuit board electrically connected to the protection circuit module,
wherein the molding part comprises a fixing part to which the flexible printed circuit board is fixed.

2. The battery pack of claim 1, wherein the fixing part comprises:
a first opening on a lower surface of the molding part;
a second opening on a side of the molding part; and
a connection passage connecting the first opening and the second opening.

3. The battery pack of claim 2, wherein the flexible printed circuit board is inserted through the first opening and drawn out to the second opening through the connection passage.

4. The battery pack of any one of claims 1 to 3, further comprising:
an electronic device seated on a first surface of the circuit board; and
a first pad and a second pad on a second surface of the circuit board opposite to the first surface, wherein the first pad is electrically connected to the electrode tab and the second pad is electrically connected to the flexible printed circuit board.

5. The battery pack of claim 4, wherein the molding part covers the first surface and the electronic device.

6. The battery pack of claim 4 or claim 5, wherein the molding part covers the second surface and exposes the first pad and the second pad.

7. The battery pack of any one of claims 2 to 6, wherein one end of the flexible printed circuit board is coupled to the lower surface of the molding part, and another end of the flexible printed circuit board protrudes from the side of the molding part.

8. The battery pack of claim 7, further comprising a connector that is at the another end of the flexible printed circuit board.
